# EUROPEAN PATENT APPLICATION

(11) **EP 4 807 372 A1**
(43) Date of publication of application: **16.09.2026**
(21) Application number: 26164304.3
(22) Date of filing: 12.03.2026
(51) Int. Cl.: G01N 35/04

(54) **AUTOMATIC ANALYZER AND CELL CASSETTE**

(30) Priority: 14.03.2025 JP 2025041538
(71) Applicant: Canon Medical Systems Corporation, Tochigi 324- (JP)
(72) Inventor: YAMAMOTO, Tetsushi, Otawara-shi, 324-0036 (JP); KODAMA, Kiwamu, Otawara-shi, 324-0036 (JP); GOTO, Takashi, Otawara-shi, 324-0036 (JP); SAITOU, Masaaki, Otawara-shi, 324-0036 (JP); MURATA, Tatsuya, Otawara-shi, 324-0036 (JP); MURAMATSU, Tomomi, Otawara-shi, 324-0036 (JP); KINPARA, Takeshi, Otawara-shi, 324-0036 (JP)
(74) Representative: Marks & Clerk LLP

(57) **Abstract**

According to one embodiment, an automatic analyzer includes a cell, a plurality of holders, and a temperature-controlled bath. The cell contais a reaction liquid. The plurality of holders hold the cell and includes a housing provided with an insertion hole into which the cell is inserted. The housing includes a groove in which a bottom surface is formed such that an edge of an opening of the cell inserted into the insertion hole protrudes from the bottom surface in which an opening of the insertion hole is formed. The temperature-controlled bath accommodates the plurality of holders such that part of each of the holders is immersed in a temperature-controlled liquid.

## Description

### CROSS-REFERENCE TO RELATED APPLICATIONS

This application is based upon and claims the benefit of priority from Japanese Patent Application No. 2025-041538, filed March 14, 2025, the entire contents of which are incorporated herein by reference.

### FIELD

Embodiments described herein relate generally to an automatic analyzer and a cell cassette.

### BACKGROUND

For an automatic analyzer, there is a system in which a plurality of cell cassettes holding a plurality of cells, each containing a mixed liquid obtained by mixing a specimen and a reagent, are put in a temperature-controlled bath storing a temperature-controlled liquid. In this system, the automatic analyzer circularly arranges the plurality of cell cassettes and performs reagent dispensing and photometric measurement by rotating the cell cassettes. There is a possibility that the temperature-controlled liquid in the temperature-controlled bath may rise to openings of the cells from a gap between the cell and the cell cassette or a gap between adjacent cell cassettes due to capillary action or the like and the temperature-controlled liquid may be mixed into the mixed liquid in the cells.

### SUMMRY

In relation to the embodiments, the following matters are disclosed as one aspect and a selective feature of the present invention.

### (Supplementary Note 1)

An automatic analyzer includes:
a cell containing a reaction liquid;
a plurality of holders holding the cell; and
a temperature-controlled bath accommodating the plurality of holders such that part of each of the holders is immersed in a temperature-controlled liquid,
in which each of the plurality of holders includes a housing provided with an insertion hole into which the cell is inserted, and
the housing includes a groove in which a bottom surface is formed such that an edge of an opening of the cell inserted into the insertion hole protrudes from the bottom surface in which an opening of the insertion hole is formed.

### (Supplementary Note 2)

The housing of each of the plurality of holders may include a cutout that allows the grooves to communicate with each other on a surface facing a holder of the plurality of holders.

### (Supplementary Note 3)

The temperature-controlled bath may accommodate the plurality of holders circularly, and
the cutout may be provided such that the grooves of the plurality of holders communicate with each other to form a moat-like shape.

### (Supplementary Note 4)

A side wall on an outer peripheral side of the groove may be provided with a first through hole for discharging a liquid flowing through the groove.

### (Supplementary Note 5)

A cover provided removably in the housing and provided with a second through hole at a position corresponding to the insertion may be further included, and
the cover may fix the cell to the housing by pressing the edge of the opening of the cell inserted into the insertion hole with an edge of the second through hole.

### (Supplementary Note 6)

A side wall on an outer peripheral side of the groove may be provided with a first through hole for discharging the liquid flowing through the groove, and
the cover may further include an engagement portion that engages with the first through hole or an edge of the first through hole.

### (Supplementary Note 7)

The cover may further include a vent hole that communicates with a gap between the cover and the bottom surface of the groove.

### (Supplementary Note 8)

An opening of the second through hole may be provided to have a larger longitudinal or horizontal width than the opening of the cell.

### (Supplementary Note 9)

A liquid avoiding portion that protrudes toward the bottom surface of the groove from the back surface may be included on a back surface of the cover that faces the bottom surface of the groove.

### (Supplementary Note 10)

The temperature-controlled bath may accommodate the plurality of holders circularly, and
the liquid avoiding portion may be provided on an inner peripheral side relative to the cell inserted into the insertion hole.

### (Supplementary Note 11)

The liquid avoiding portion may be provided to cause a liquid flowing along the back surface to fall onto the bottom surface of the groove.

### (Supplementary Note 12)

The housing may further include a water conduit provided on an outer peripheral side of the side wall and in which cut plates are formed on a side wall on an outer peripheral side, and
the water conduit may form a flow path of the liquid discharged from the first through hole.

### (Supplementary Note 13)

A cell cassette includes a housing provided with an insertion hole into which a cell containing a reaction liquid is inserted,
in which the housing includes a groove in which a bottom surface is formed such that an edge of an opening of the cell inserted into the insertion hole protrudes from the bottom surface in which an opening of the insertion hole is formed.

### BRIEF DESCRIPTION OF THE DRAWINGS

FIG. 1 is a diagram showing an exemplary configuration of an automatic analyzer according to the present embodiment.
FIG. 2 is a view showing an exemplary structure of an analysis mechanism according to the present embodiment.
FIG. 3 is a view showing an exemplary structure of a cell cassette according to the present embodiment.
FIG. 4 is a view illustrating a cross section of a first through hole according to the present embodiment.
FIG. 5 is a view illustrating a cross section of an insertion hole according to the present embodiment.
FIG. 6 is a view illustrating a side surface of a housing according to the present embodiment.
FIG. 7 is a first view illustrating a moving path of a temperature-controlled liquid according to the present embodiment.
FIG. 8 is a second view illustrating the moving path of the temperature-controlled liquid according to the present embodiment.
FIG. 9 is a third view illustrating the moving path of the temperature-controlled liquid according to the present embodiment.
FIG. 10 is a view illustrating a discharge path of the temperature-controlled liquid from the first through hole according to the present embodiment.
FIG. 11 is a view illustrating a shape of a second through hole according to the present embodiment.
FIG. 12 is a view illustrating a liquid avoiding portion according to the present embodiment.

### DETAILED DESCRIPTION

An automatic analyzer according to the embodiment includes a cell, a plurality of holders, and a temperature-controlled bath. The cell contains reaction liquid. The plurality of holders hold the cell and have a housing provided with an insertion hole into which the cell is inserted. The housing has a groove in which a bottom surface is formed such that an edge of an opening of the cell inserted into the insertion hole protrudes from the bottom surface in which an opening of the insertion hole is formed. The temperature-controlled bath accommodates the plurality of holders such that part of each of the holders is immersed in the temperature-controlled liquid.

### (Embodiment)

Hereinafter, embodiments of the automatic analyzer according to the present embodiment will be described in detail with reference to the accompanying drawings.

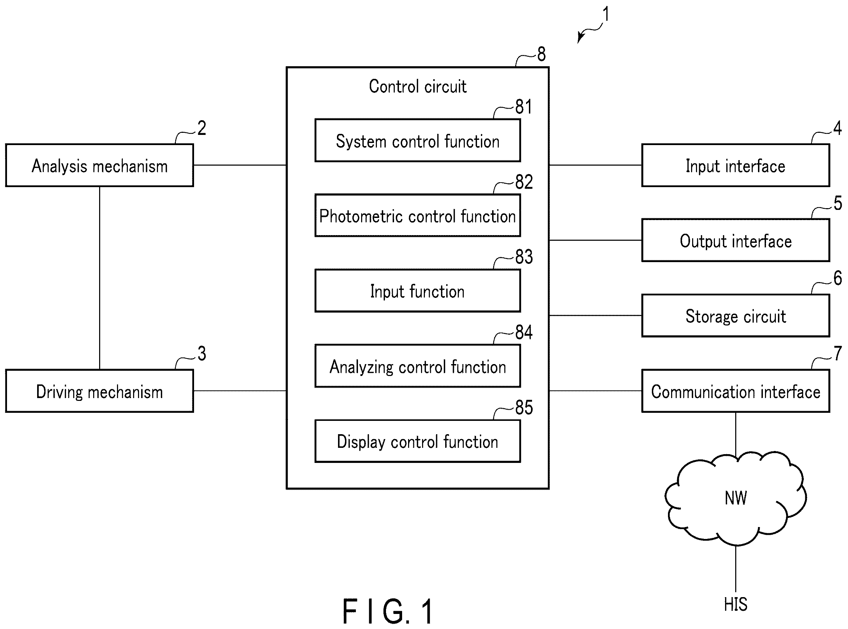

FIG. 1 is a diagram showing an exemplary configuration of an automatic analyzer 1 according to the present embodiment. The automatic analyzer 1 includes an analysis mechanism 2, a driving mechanism 3, an input interface 4, an output interface 5, a storage circuit 6, a communication interface 7, and a control circuit 8.

The analysis mechanism 2 mixes a specimen such as a standard specimen or an examination target specimen with a reagent used for each examination item determined for the specimen. The analysis mechanism 2 includes a photometric unit that performs photometry on the mixed liquid of the specimen and the reagent. The mixed liquid may also be referred to as a reaction liquid. The photometric unit performs photometry on the mixed liquid to thereby generate photometric data. The analysis mechanism 2 generates an analysis result including examination item values or the like regarding component analysis of the specimen, based on the photometric data generated by the photometric unit. The analysis result may include a result of the above analysis related to the cells and/or the detector. The cell may also be referred to as a reaction container or a reaction tube.

The driving mechanism 3 may be realized by a gear, a stepping motor, a conveyor belt, a lead screw and the like. Under the control of the control circuitry 8, the driving mechanism 3 drives the analysis mechanism 2.

The input interface 4 may be realized by, for example, a mouse, a keyboard, a touch pad or the like on which a command is input when the operation screen is touched. The input interface 4 may receive, for example, setting of analysis parameters and the like for respective examination items regarding a measurement requested specimen from a user. The input interface 4 is coupled to the control circuitry 8 so that an operation command input by the user can be converted to an electrical signal user, which can be output to the control circuitry 8. Throughout the specification, the input interface 4 is not limited to an interface including a physical operational component such as a mouse and a keyboard. For example, the input interface 4 receives an electrical signal corresponding to an operation command that has been input from an external input device provided separately from the automatic analyzer 1. Examples of the input interface 4 include electric signal processing circuitry that outputs the electric signal to the control circuitry 8.

The output interface 5 is coupled to the control circuitry 8 to output a signal supplied from the control circuitry 8. The output interface 5 may be realized by, for example, display circuitry, print circuitry, an audio device and the like.

Examples of the display circuitry may include a cathode ray tube (CRT) display, a liquid crystal display, an organic electro-luminescence (EL) display, a light-emitting diode (LED) display, and a plasma display. The display circuitry may include processing circuitry configured to convert data indicating a display target to a video signal and externally output the video signal. The print circuitry may include, for example, a printer. The print circuitry may include output circuitry configured to externally output the data indicating a print target. The output interface 5 may be realized as a touch panel, a touch screen or the like together with the input interface 4.

The storage circuit 6 includes a magnetic storage medium, an optical storage medium, or a processor readable storage medium such as a semiconductor memory. The storage circuit 6 does not need to be realized by a single storage medium. For example, the storage circuit 6 may be realized by a plurality of storage devices.

The communication interface 7 is coupled to, for example, the intra-hospital network NW. The communication interface 7 performs data communication with a hospital information system (HIS) through the intra-hospital network NW. The communication interface 7 may perform data communication with the HIS through a laboratory information system (LIS) coupled to the intra-hospital network NW.

The control circuitry 8 controls the driver 3 and drives the analysis mechanism 2. The control circuitry 8 is a processor serving as the center of the automatic analyzer 1. The control circuitry 8 implements the operation program stored in the storage circuit 6 to realize the functions corresponding to the operation program. The functions of the control circuitry 8 will be described later. The control circuitry 8 may include a storage area storing at least some data stored in the storage circuit 6.

The control circuitry 8 implements, for example, the control program to realize a system control function 81, a photometric control function 82, an input function 83, an analyzing control function 84, and a display control function 85. In the present embodiment, a single processor realizes the system control function 81, the photometric control function 82, the input function 83, the analyzing control function 84, and the display control function 85; however, the embodiment is not limited thereto. Multiple independent processors may be combined to form control circuitry, and each of the processors may implement the control program to realize the system control function 81, the photometric control function 82, the input function 83, the analyzing control function 84, and the display control function 85.

Through implementation of the system control function 81, the control circuitry 8 integrally controls the units in the automatic analyzer 1, for example, based on the input information or the like entered from the input interface 4. To be more specific, the control circuitry 8 controls a rotation operation of a reaction disk 201, a rotation operation and a dispensing operation of a specimen dispensing probe 207, a rotation operation and a dispensing operation of a first reagent dispensing probe 209, a rotation operation and a dispensing operation of a second reagent dispensing probe 211, and the like.

Through implementation of the photometric control function 82, the control circuitry 8 controls the units to execute a photometric operation. As an example, the control circuitry 8 acquires the photometric data of the mixed liquid in the cell.

Through implementation of the input control function 83, the control circuitry 8 outputs various types of information. As an example, the control circuitry 8 inputs examination items of the photometric operation.

Through implementation of the analyzing control function 84, the control circuitry 8 analyzes the specimen for various examination items. As an example, the control circuitry 8 generates a result of analysis of the specimen.

Through implementation of the display control function 85, the control circuitry 8 displays various types of information relating to the photometric data. As an example, the control circuitry 8 displays the analysis result.

According to the present embodiment, a single processor realizes the respective functions; however, the embodiment is not limited thereto. For example, control circuitry may be configured by combining a plurality of independent processors, and the processors may execute respective programs to implement the functions. The above description of the functions executed by the control circuitry 8 is applied to the embodiments and modifications described below.

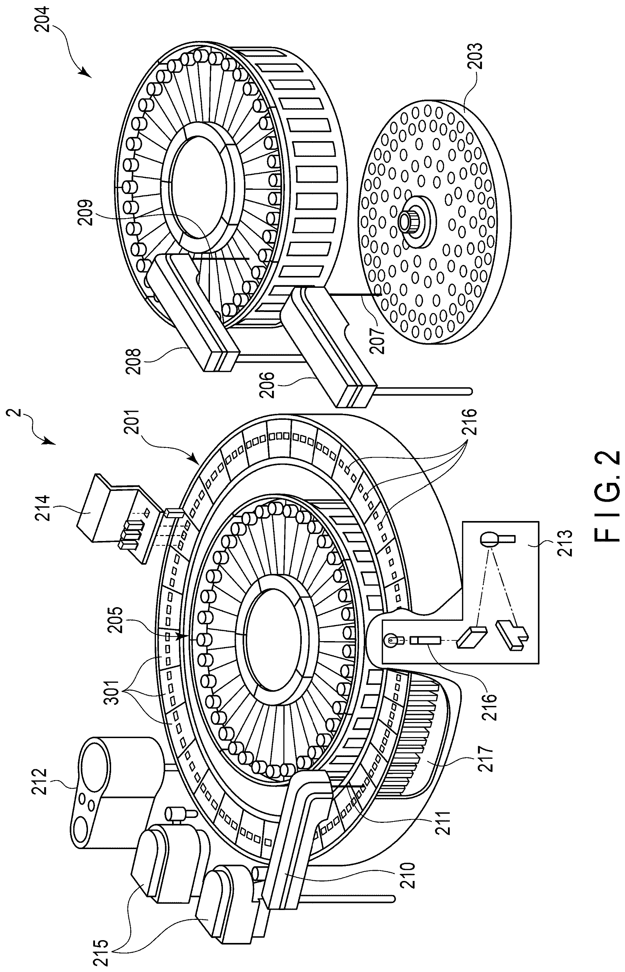

FIG. 2 is a schematic view showing an example of a structure of the analysis mechanism 2 illustrated FIG. 1. The analysis mechanism 2 illustrated in FIG. 2 includes a reaction disk 201, a specimen disk 203, a first reagent storage 204, and a second reagent storage 205. Furthermore, the analysis mechanism 2 includes a specimen dispensing arm 206, a specimen dispensing probe 207, a first reagent dispensing arm 208, a first reagent dispensing probe 209, a second reagent dispensing arm 210, a second reagent dispensing probe 211, an electrode unit 212, a photometric unit 213, a cleaning unit 214, and a stirring unit 215.

The reaction disk 201 holds a plurality of cells 216. The reaction disk 201 carries the plurality of cells 216 along a predetermined path such as a circular path. To be specific, the reaction disk 201 alternately repeats rotating and stopping in predetermined time intervals (hereinafter referred to as one circle or one cycle), e.g., every 4.5 seconds, with the driving mechanism 3. The cell 216 is formed of, for example, glass, polypropylene (PP), or acrylic. At multiple positions on the rotation path of the cells 216, a specimen discharge position, a first reagent discharge position, a second reagent discharge position, a stirring position and the like are set.

To be specific, as illustrated in FIG. 2, the reaction disk 201 circularly accommodates a plurality of cassettes 301 in a detachable manner. The cassette 301 has an arc shape and holds the plurality of cells 216 along the arc at predetermined intervals. The cells 216 are held by the cassette 301 detachably in the vertical direction. That is, the reaction disk 201 carries the cassettes 301, thereby carrying the cells 216 held in the cassettes 301. The details of the cassette 301 will be described later. The cassette 301 is an example of a holder or a cell cassette.

The temperature-controlled bath 217 holds a temperature-controlled liquid (e.g., water) maintained at a predetermined temperature (e.g., 37°C). By soaking the cassettes 300 holding the cells 216 in the heating medium, the temperature-controlled bath 217 raises the temperature of the mixed liquid contained in the cells 216 and maintains the temperature to be constant. The temperature-controlled bath 217 may be referred to as a reaction bath.

The specimen disk 203 holds a plurality of specimen containers containing measurement requested specimens. The specimen disk 203 carries the plurality of specimen containers along a predetermined path such as a circular path. As illustrated in FIG. 2, the specimen disk 203 is arranged adjacent to the reaction disk 201. At a predetermined position on the specimen disk 203, a specimen suction position is set. The specimen disk 203 may be covered by a removable cover.

The first reagent storage 204 holds a plurality of reagent containers containing a first reagent that reacts with a certain component contained in a specimen. In the example illustrated in FIG. 2, the first reagent storage 204 is arranged adjacent to the reaction disk 201. A first reagent rack is provided rotatably inside the first reagent storage 204. The first reagent rack holds a plurality of reagent containers that are circularly arranged. The first reagent rack is rotated by the driving mechanism 3. At a predetermined position on the first reagent storage 204, a first reagent suction position is set. The first reagent storage 204 may contain a second reagent. The second reagent is a reagent that is dispensed after the first reagent storage is dispensed. The reagent container may be referred to as a reagent bottle. The first reagent storage 204 may be covered by a removable reagent cover.

The second reagent storage 205 stores a plurality of reagent containers containing the second reagent. In the example illustrated in FIG. 2, the second reagent storage 205 is arranged inside the reaction disk 201. A second reagent rack is provided rotatably inside the second reagent storage 205. The second reagent rack holds a plurality of reagent containers that are circularly arranged. The second reagent rack is rotated by the driving mechanism 3. At a predetermined position on the second reagent storage, a second reagent suction position is set. The second reagent storage 205 may be covered by a removable reagent cover.

Next, a description will be given of the specimen dispensing arm 206, the specimen dispensing probe 207, the first reagent dispensing arm 208, the first reagent dispensing probe 209, the second reagent dispensing arm 210, the second reagent dispensing probe 211, the electrode unit 212, the photometric unit 213, the cleaning unit 214, and the stirring unit 215

The specimen dispensing arm 206 is arranged, for example, between the reaction disk 201 and the specimen disk 203. The specimen dispensing arm 206 includes, at one end thereof, the specimen dispensing probe 207. Driven by the driving mechanism 3, the specimen dispensing arm 206 places the specimen probe 207 immediately above the opening of the specimen container held in the specimen disk 203 (the specimen suction position), and lowers the specimen dispensing probe 207 to a position where the specimen dispensing probe 207 can suck up the specimen. Under the control of the control circuitry 8, the specimen dispensing probe 207 sucks up the specimen. Driven by the driving mechanism 3, the specimen dispensing arm 206 raises the specimen dispensing probe 207. Driven by the driving mechanism 3, the specimen dispensing arm 206 is rotated to thereby move the specimen dispensing probe 207 immediately above the opening of the cell 216 held in the reaction disk 201 (the specimen discharge position), and driven by the driving mechanism 3, the specimen dispensing arm 206 lowers the specimen dispensing probe 207 to a position where the specimen dispensing probe 207 at the specimen discharge position can discharge the specimen. Under the control of the control circuitry 8, the specimen dispensing probe 207 discharges the sucked up specimen to the cell 216. Driven by the driving mechanism 3, the specimen dispensing arm 206 raises the specimen dispensing arm 207. The specimen dispensing arm 206 and the specimen dispensing probe 207 perform a series of dispensing operations of raising, lowering, rotating, sucking up, and discharging, for example, once per cycle.

The first reagent dispensing arm 208 is arranged, for example, between the reaction disk 201 and the first reagent storage 204. The first reagent dispensing arm 208 includes, at one end thereof, a first reagent dispensing probe 209. Driven by the driving mechanism 3, the first reagent dispensing arm 208 places the first reagent dispensing probe 209 immediately above the opening of the reagent container held in the first reagent rack (the first reagent suction position), and lowers the first reagent dispensing probe 209 to a position where the first reagent dispensing probe 209 can suck up the specimen. Under the control of the control circuitry 8, the first reagent dispensing probe 209 sucks up the first reagent from the reagent container. Driven by the driving mechanism 3, the first reagent dispensing arm 208 raises the first reagent dispensing probe 209. Driven by the driving mechanism 3, the first reagent dispensing arm 208 is rotated to thereby move the first reagent dispensing probe 209 immediately above the opening of the cell 216 held in the reaction disk 201 (the first reagent discharge position). Driven by the driving mechanism 3, the first reagent dispensing arm 208 lowers the first reagent dispensing probe 209 to a position where the first reagent dispensing probe 209 at the first reagent discharge position can discharge the first reagent. Under the control of the control circuitry 8, the first reagent dispensing probe 209 discharges the sucked up first reagent to the cell 216. Driven by the driving mechanism 3, the first reagent dispensing arm 208 raises the first reagent dispensing probe 209. The first reagent dispensing arm 208 and the first reagent dispensing probe 209 perform a series of dispensing operations of raising, lowering, rotating, sucking up, and discharging, for example, once per cycle. The series of dispensing operations applies to a case where the first reagent dispensing probe 209 dispenses the second reagent.

The second reagent dispensing arm 210 is arranged, for example, between the reaction disk 201 and the second reagent storage 205. The second reagent dispensing arm 210 includes, at one end thereof, a second reagent dispensing probe 211. Driven by the driving mechanism 3, the second reagent dispensing arm 210 places the second reagent dispensing probe 211 immediately above the opening of the reagent container held in the second reagent rack (the second reagent suction position), and lowers the second reagent dispensing probe 211 to a position where the second reagent dispensing probe 211 can suck up the specimen. Under the control of the control circuitry 8, the second reagent dispensing probe 211 sucks up the second reagent from the reagent container. Driven by the driving mechanism 3, the second reagent dispensing arm 210 raises the second reagent dispensing probe 211. Driven by the driving mechanism 3, the second reagent dispensing arm 210 is rotated to thereby move the second reagent dispensing probe 211 immediately above the opening of the cell 216 held in the reaction disk 201 (at a second reagent discharge position). Driven by the driving mechanism 3, the second reagent dispensing arm 210 lowers the second reagent dispensing probe 211 to a position where the second reagent dispensing probe 211 at the second reagent discharge position can discharge the second reagent. Under the control of the control circuitry 8, the second reagent dispensing probe 211 discharges the sucked up second reagent to the cell 216. Driven by the driving mechanism 3, the second reagent dispensing arm 210 raises the second reagent dispensing probe 211. The second reagent dispensing arm 210 and the second reagent dispensing probe 211 perform a series of dispensing operations of raising, lowering, rotating, sucking up, and discharging, for example, once per cycle.

The electrode unit 212 is provided near the outer periphery of the reaction disk 201. The electrode unit 212 measures an electrolyte concentration of the mixed liquid of the specimen and the reagent discharged to the cell 216. The electrode unit 212 has an ion selective electrode (ISE) and a reference electrode. Under the control of the control circuitry 8, the electrode unit 212 measures a potential between the ISE and the reference electrode for the mixed liquid containing measurement target ions.

The photometric unit 213 is provided near the outer periphery of the reaction disk 201. The photometric unit 213 optically measures certain components of the mixed liquid of the specimen and the reagent discharged into the cell 216. The photometric unit 216 emits light from the light source. The emitted light is incident from a first side wall of the cell 216 and is output through a second side wall facing the first side wall. The photometric unit 213 detects the light output from the cell 216 with a photodetector. The photometric unit 213 reads out a detection signal from the photodetector and generates photometric data based on the detection signal.

The cleaning unit 214 is provided near the outer periphery of the reaction disk 201. The cleaning unit 214 cleans the inside of the cell 216 in which the measurement of the mixed liquid has been completed by the electrode unit 212 or the photometric unit 213. The cleaning unit 214 is provided with a cleaning liquid supply pump (not shown) for supplying a cleaning liquid for cleaning the cell 216. The cleaning unit 214 is also provided with a cleaning nozzle for discharging the cleaning liquid supplied from the cleaning liquid supply pump into the cell 216 and sucking up the mixed liquid and liquids in the cell 216.

The stirring unit 215 is provided near the outer periphery of the reaction disk 201. The stirring unit 215 includes a stirrer, with which the mixed liquid of the specimen and the first reaction contained in the cell 216 at the stirring position on the reaction disk 201 is stirred. Alternatively, the stirring unit 215 stirs the mixed liquid of the specimen, the first reagent, and the second reagent, contained in the cell 216.

Hereinafter, expressions such as "under the control of the control circuitry 8" when the control circuitry 8 controls respective units and "driven by the driving mechanism 3" when the driving mechanism 3 drives respective units will be omitted.

Next, a concrete structure of the cassette 301 will be described.

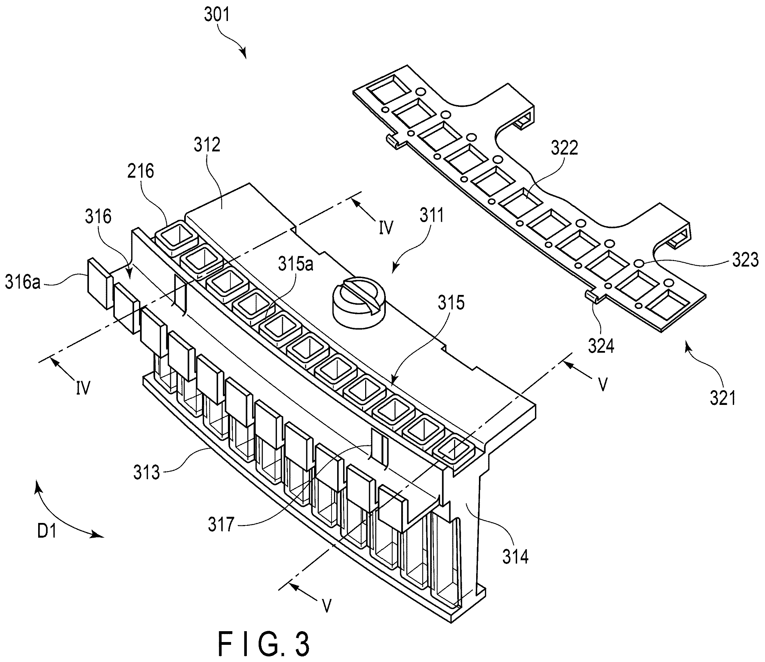

FIG. 3 is an exploded view illustrating a structure of the cassette 301 provided in the reaction disk 201 of FIG. 2. As shown in FIG. 3, the cassette 301 has an arc shape sharing the same center as the reaction disk 201. The cassette 301 includes a housing 311 and a cover 321. The housing 311 may also be referred to as a cell holder or a holder. Hereinafter, the terms "inner periphery" and "outer periphery" are used for the arc shape.

The housing 311 is provided with holes into which the cells 216 are inserted (hereinafter "insertion holes"). The insertion holes are arranged in a row along the arc shape of the cassette 301. As an example, the housing 311 has eleven insertion holes. The housing 311 consists of an upper member 312, a lower member 313, and a side surface member 314. The upper member 312 and the lower member 313 are connected via the side surface member 314. By the upper member 312 being supported by the reaction disk 201, the housing 311 is accommodated in the temperature-controlled bath 217. In this case, the lower member 313 does not need to be in contact with the temperature-controlled bath 217 as long as it is immersed in the temperature-controlled liquid stored in the temperature-controlled bath 217. The lower parts of the cells 216 are immersed in the temperature-controlled liquid stored in the temperature-controlled bath 217, thereby heating the mixed liquid contained in the cells 216.

In addition, a groove portion 315 having a recessed shape is formed on a top surface of the upper member 312. The groove portion 315 has a bottom surface 315a, an inner side surface, and an outer side surface. In the groove portion 315, a plurality of insertion holes arranged in the arc shape are formed, and openings of the insertion holes are arranged in the bottom surface 315a of the groove portion 315. The groove portion 315 communicates one side surface member 314 and the other side surface member 314 of the housing 311 along the arc shape of the housing 311. The inner side surface on the outer peripheral side of the groove portion 315 is provided with a first through hole 317 that penetrates to the outer side surface on the outer peripheral side of the groove portion 315. In one example, the upper member 312 includes two first through holes 317. A side wall of the groove portion 315 having the inner side surface on the outer peripheral side and the outer side surface on the outer peripheral side is part of a side wall of the upper member 312 on the outer peripheral side.

The side wall of the upper member 312 on the outer peripheral side is provided with a water conduit portion 316. The water conduit portion 316 has an L shape curved in the arc shape. The water conduit portion 316 includes a bottom surface and a side wall. In the side wall of the water conduit portion 316, a plurality of cut plates 316a are formed. The cut plates 316a serve as a side wall of the water conduit portion 316 on the outer peripheral side. The cut plates 316a may have substantially the same width as the insertion holes in an arc direction D1, and the number and positions may correspond to those of the insertion holes. The cut plates 316a are used to optically detect the position of the cells 216. The water conduit portion 316 forms a recess-shaped water conduit 316b together with the side wall of the upper member 312 on the outer peripheral side.

The cut plates 316a do not need to be provided in the upper member 312 as a side wall of the water conduit portion 316. For example, the cut plates 316a may be provided in the side wall of the upper member 312 on the outer peripheral side such that the main surfaces face the vertical direction. In this case, the water conduit 316 does not need to be provided in the upper member 312.

The cover 321 is provided in the cassette 301 in a removable manner. The cover 321 includes a second through hole 322, a vent hole 323, and an engagement portion 324. The second through hole 322 penetrates the cover 321, and is provided at a position corresponding to each insertion hole when the cover 321 is provided in the housing 311. The vent hole 323 penetrates the cover 321 and is a hole different from the second through hole 322. The engagement portion 324 is provided to engage with the first through hole 317 or an edge portion of the first through hole 317.

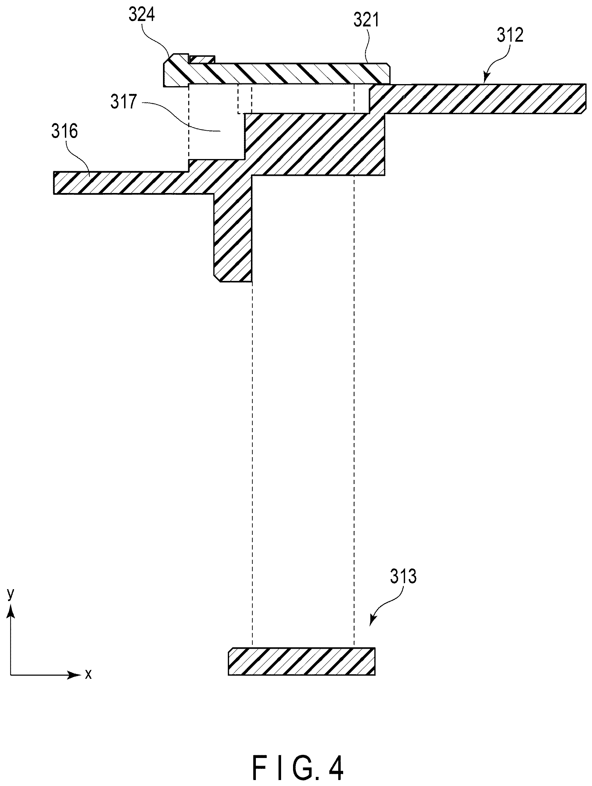

FIG. 4 is a cross-sectional view of line IV-IV of FIG. 3 when the cover 321 is provided in the housing 311. Hereinafter, the radial direction of the cassette 301 is defined as an x direction, and a vertical direction orthogonal to the x direction is defined as a y direction. FIG. 4 illustrates a cross section of the upper member 312, the lower member 313, and the cover 321. The cover 321 has the engagement portion 324 that engages with the first through hole 317 or the edge portion of the first through hole 317. The cover 321 fixes the cell 216 to the housing 311 by pressing an edge portion of the opening of the cell 216 with an edge portion of the second through hole 322. The edge portion of the opening of the cell 216 is an end surface having the opening provided at one end of the cell 216. As a concrete example, a hook-shaped engagement portion 324 is hooked on the edge portion of the first through hole 317, and the cover 321 thus fixes the cell 216 to the housing 311 in a removable manner. By providing the cover 321 in a detachable manner, as compared to when the cover is fixed to the housing with press fitting or the like, it is possible to easily take out the cells 216 from the cassette 301 separately and to reduce the costs of manufacturing the cassette 301.

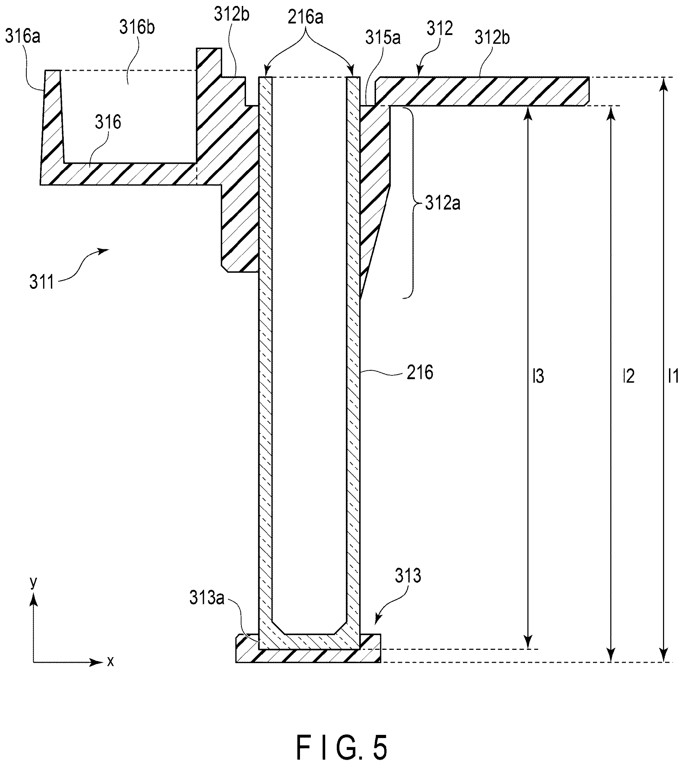

FIG. 5 is a cross-sectional view taken along line V-V of FIG. 3. FIG. 5 illustrates a cross section of the cell 216, the upper member 312, and the lower member 313. The cell 216 is inserted into the insertion hole 312a that penetrates the upper member 312 in the -y direction from the opening provided in the bottom surface 315a, whereby an upper side surface of the cell 216 is supported by the upper member 312. Furthermore, the cell 216 inserted into the insertion hole 312a is supported by a recessed member 313a provided in the lower member 313. The insertion hole 312a supports the upper side surface of the inserted cell 216. The bottom surface 315a is provided at a position having a distance l2 in the y direction from the bottom surface of the lower member 313, which is shorter than a distance l1 in the y direction from the bottom surface of the lower member 313 to the top surface 321b of the upper member 312. The difference between the distances l1 and l2 is a depth of the groove portion 315. A distance l3 in the y direction from the bottom surface of the recessed member 313a to the bottom surface 315a of the groove portion 315 is set to be shorter than a length of the cell 216 in the y direction from the bottom surface to the edge portion 216a of the opening. Thus, the cell 216 inserted into the insertion hole 312a is provided so as to protrude from the bottom surface 315a. The length by which the cell 216 protrudes from the bottom surface of the groove portion 315 may be substantially the same as the depth of the groove portion 315.

Furthermore, the insertion hole 312a provided in the upper member 312 and the recessed member 313a provided in the lower member 313 hold the cell 216, and thereby the housing 311 fixes the cell 216 inserted into the insertion hole 312a. By the cell 216 being fixed to the housing 311, the cell 216 is positioned with respect to the housing 311. Thus, the cell 216 can be positioned in the housing 311 without fixing the cover 321 to the housing 311 by press fitting or the like.

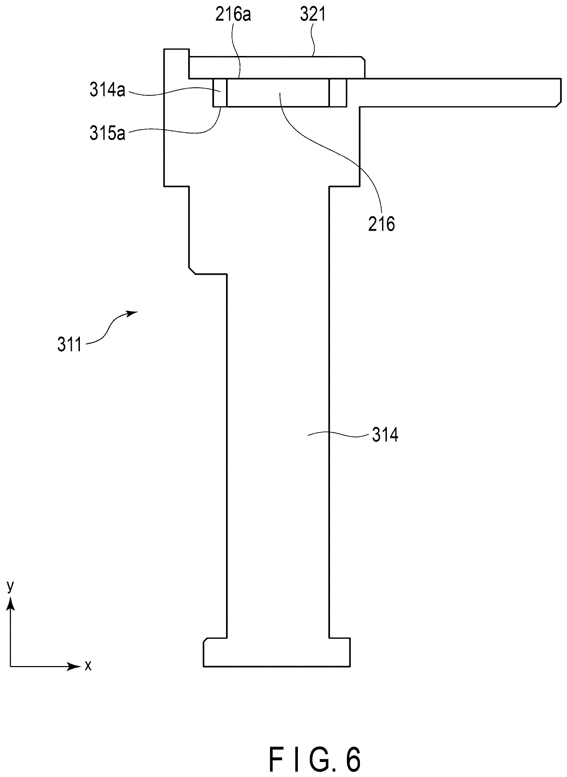

FIG. 6 is a side surface view of the housing 311. The cell 216 and the cover 321 are also illustrated for explanation. As illustrated in FIG. 6, the side surface member 314 is provided with a cutout 314a to allow the adjacent groove portions 315 to communicate with each other in the arc direction. Since the plurality of cassettes 301 are accommodated circularly in the temperature-controlled bath 217, the plurality of groove portions 315 communicate with each other via the cutout 314a, thereby forming a moat in an annular shape. By providing the cutout 314a, the bottom surface 315a of the groove portion 315 is connected to the main surface of the side surface member 314. The width of the groove portion 315 in the x direction is set to be wider than that of the edge portion 216a.

Upon the plurality of cassettes 301 that are adjacent to each other being immersed in the temperature-controlled liquid, due to capillary action or the like, the temperature-controlled liquid rises along the cassettes 301 and flows into the groove portion 315. With the above-described structure, the cassette 301 according to the present embodiment prevents or reduces entering of the temperature-controlled liquid into the inside of the cells 216. Hereinafter, a moving path of the temperature-controlled liquid of the present embodiment will be described.

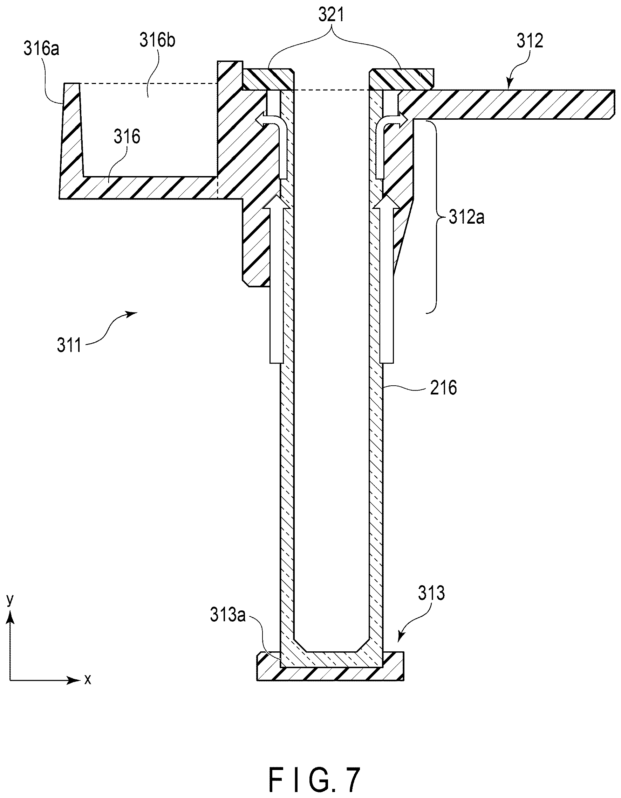

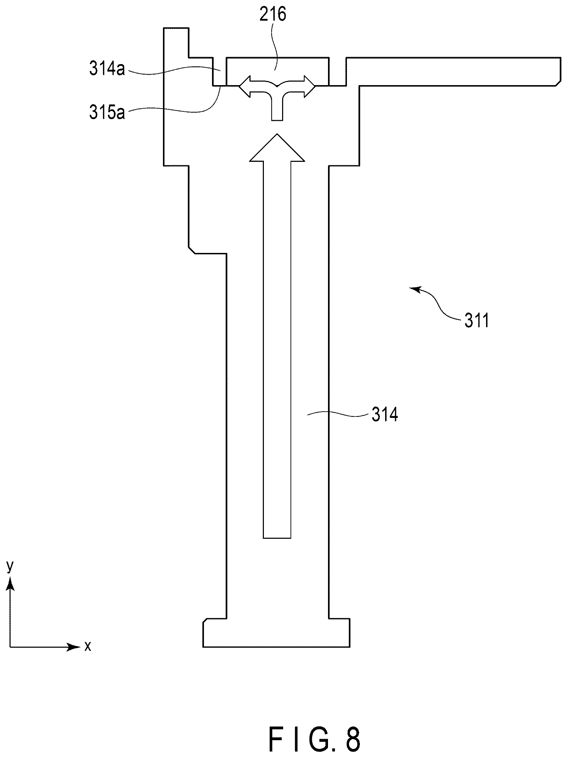

FIGS. 7 and 8 illustrate a moving path of the temperature-controlled liquid. FIG. 7 illustrates a moving path of the temperature-controlled liquid in a cross section taken along line V-V, and FIG. 8 illustrates a moving path of the temperature-controlled liquid in the side surface member. The arrow indicates the moving path of the temperature-controlled liquid. Because of capillary action or the like, the temperature-controlled liquid rises through the gap between the side surface of the cell 216 and the insertion hole 312a and/or the gap between the side surface members 314 of the adjacent housings 311. As illustrated in FIG. 7, part of the temperature-controlled liquid that has risen through the gap between the side surface of the cell 216 and the insertion hole 312a flows into the groove portion 315. Furthermore, as illustrated in FIG. 8, part of the temperature-controlled liquid that has risen through the gap between the side surface members of the adjacent housings reaches the cutout 314a. In the cutout 314a, the side surface members of the adjacent housings do not face each other, and part of the temperature-controlled liquid that has risen to the cutout 314a moves along the edge of the cutout 314a because of surface tension or the like. Furthermore, another part of the temperature-controlled liquid that has risen to the cutout 314a flows into the groove portion 315 from the cutout 314a.

As illustrated in FIG. 5, the distance l3 in the y direction from the bottom surface of the recessed member 313a to the bottom surface 315a of the groove portion 315 is set to be shorter than a length of the cell 216 in the y direction from the bottom surface to the edge portion 216a of the opening. Therefore, the edge portion 216a of the opening of the cell 216 inserted into the insertion hole 312a provided in the bottom surface 315a protrudes from the bottom surface 315a, the temperature-controlled liquid rising through the gap between the cell 216 and the insertion hole 312a and/or the gap between the side surface members 314 of the adjacent housings 311 because of capillary action or the like can flow into the bottom surface 315a at a position lower than the edge portion 216a of the cell 216, and the possibility that the temperature-controlled liquid will enter the inside of the cell 216 can be reduced. Furthermore, by providing the cutout 314a that allows the groove portion 315 and the side surface member 314 to communicate with other, it is possible to guide the movement of the temperature-controlled liquid flowing along the side surface member 314 in a direction along the edge of the cutout 314a and to reduce the possibility that the temperature-controlled liquid will enter the inside of the cell 216.

Furthermore, since the cutout 314a is provided so as to connect the side surface member 314 and the bottom surface 315a of the groove portion 315, the temperature-controlled liquid rising along the side surface members 314 of the adjacent housings 311 can flow into the groove portion 315 from the cutout 314a of each housing 311.

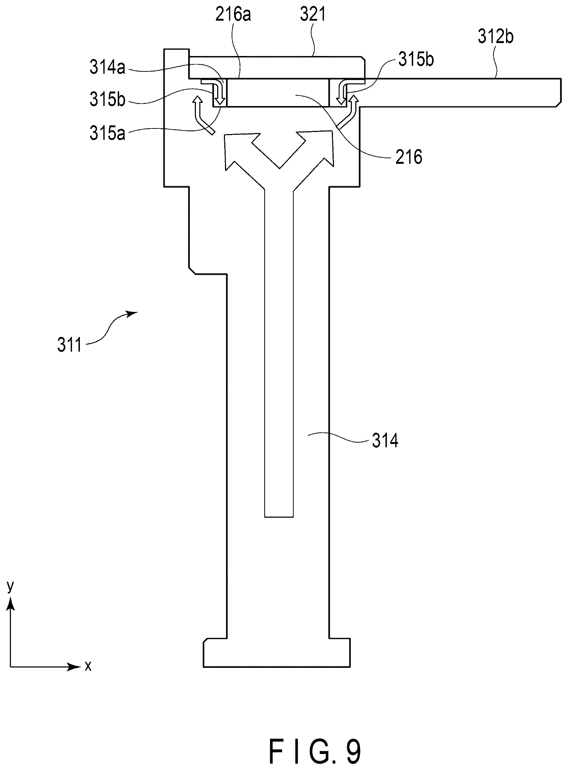

FIG. 9 is a third view illustrating the moving path of the temperature-controlled liquid. As shown in FIG. 9, the arrow indicates the moving path of the temperature-controlled liquid. Part of the temperature-controlled liquid flows into the groove portion 315 from the cutout 314a via the gap between the adjacent housings 311 illustrated in FIG. 8. Another temperature-controlled liquid not flowing into the groove portion 315 such as the temperature-controlled liquid guided along the edge of the cutout 314a or the temperature-controlled liquid bypassing the edge portion of the cutout 314a flows along both sides of the cutout 314a of the housing, rises to the back surface of the cover 321 in contact with the top surface 312b of the upper member 312, flows along the gap between the top surface 312b and the cover 321, and reaches the inner side surface 315b of the groove portion 315 on the inner peripheral side or the outer peripheral side. By providing the groove portion 315 to be wider in the x direction than the edge portion 216a, a space is formed between the back surface of the cover 321 and the bottom surface 315a of the groove portion 315, and the temperature-controlled liquid that has reached the inner side surface 315b flows down the inner side surface 315b to the bottom surface 315a. Thus, it is possible to reduce the possibility that the temperature-controlled liquid will flow along the back surface of the cover 321 and enter the inside of the cell 216.

Hereinafter, the mechanism of discharging the liquid that has flown into the groove portion 315 to the outside of the groove portion 315 will be described. It is assumed that the liquid flowing into the groove portion 315 is the temperature-controlled liquid rising from the temperature-controlled bath 217, but the liquid is not limited to the temperature-controlled liquid, and may be, for example, a mixed liquid spilling out of the cell, or a cleaning liquid used for cleaning the inside of the cell.

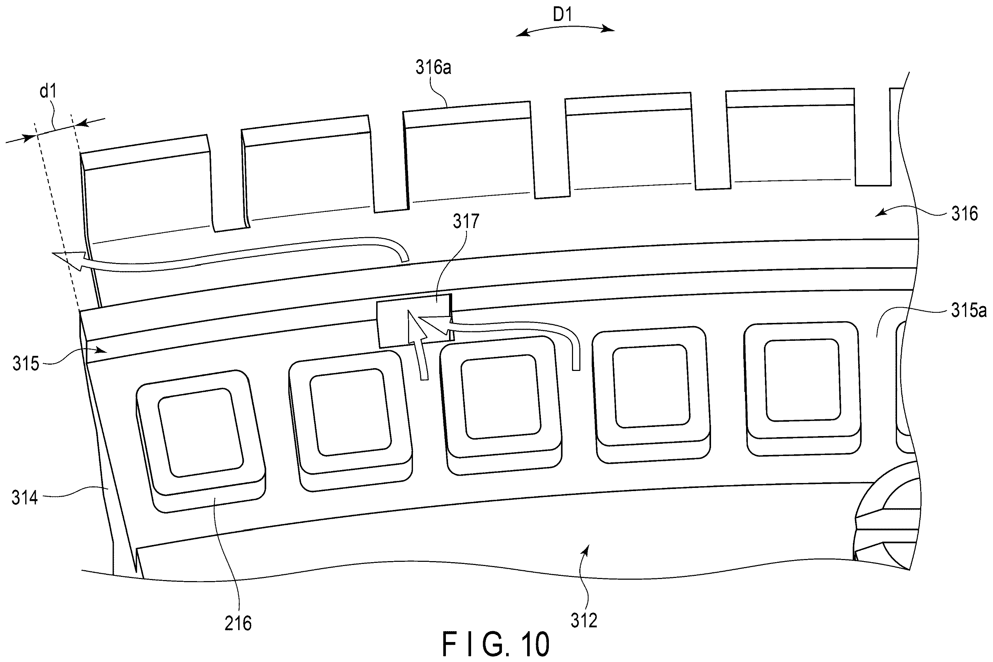

FIG. 10 is a view illustrating a discharge path of the liquid that has flown into the groove portion 315. In FIG. 10, the arrow indicates the discharge path of the liquid. As illustrated in FIG. 10, the first through hole 317 is provided in the upper member 312 so as to penetrate the inner side surface on the outer peripheral side and the outer side surface on the outer peripheral side of the groove portion 315 and to communicate with the water conduit 316b. The first through hole 317 is provided for discharging the liquid flowing through the groove portion 315 to the outside of the groove portion 315. The first through hole 317 may be at a position different from the cell 216 or the insertion hole with respect to the arc direction D1. The water conduit 316b serves also as a flow path of the liquid flown out from the first through hole 317. To be specific, the liquid flown out to the water conduit 316b may flow along the bottom surface of the water conduit portion 316.

Part of the liquid flowing through the groove portion 315 is discharged to the water conduit 316b via the first through hole 317 by the centrifugal force associated with the rotation of the cassettes 301. The liquid flowing through the water conduit 316b is discharged to the temperature-controlled bath 217 from the end portion of the water conduit 316b in the arc direction D1.

By providing the first through hole 317, it is possible to discharge the liquid flowing through the groove portion 315 from the cassette 301 via the water conduit 316b. As described above, by forming the holding portion (water conduit portion 316) of the cut plate 316a into an L shape, it is possible to utilize the space (water conduit 316b) formed by the holding portion (water conduit portion 316) of the cut plate 316a and the upper member 312 as a flow path of the liquid discharged from the groove portion 315.

The length of the water conduit portion 316 in the arc direction D1 may be formed shorter than the length of the side wall on the outer peripheral side of the upper member 312 in the arc direction D1. Thus, the water conduit portion 316 is formed to be shorter than the upper member 312 by the distance d1 in the arc direction D1. Therefore, the space having a length approximately two times d1 is provided between the water conduit portions 316 adjacent in the arc direction D1. By providing the space, the liquid flowing through the water conduit 316b can fall from the space to be discharged to the temperature-controlled bath 217.

The number, size, and/or position of the first through holes 317 are not limited to those described above. For example, the position of the first through hole 317 may be provided on the side wall on the inner peripheral side of the groove portion 315, or may be provided on the bottom surface of the groove portion 315. Furthermore, the liquid flowing through the water conduit 316b can also flow out to the temperature-controlled bath 217 from the gap between the adjacent cut plates 316a.

Hereinafter, a detailed structure of the cover 321 will be described.

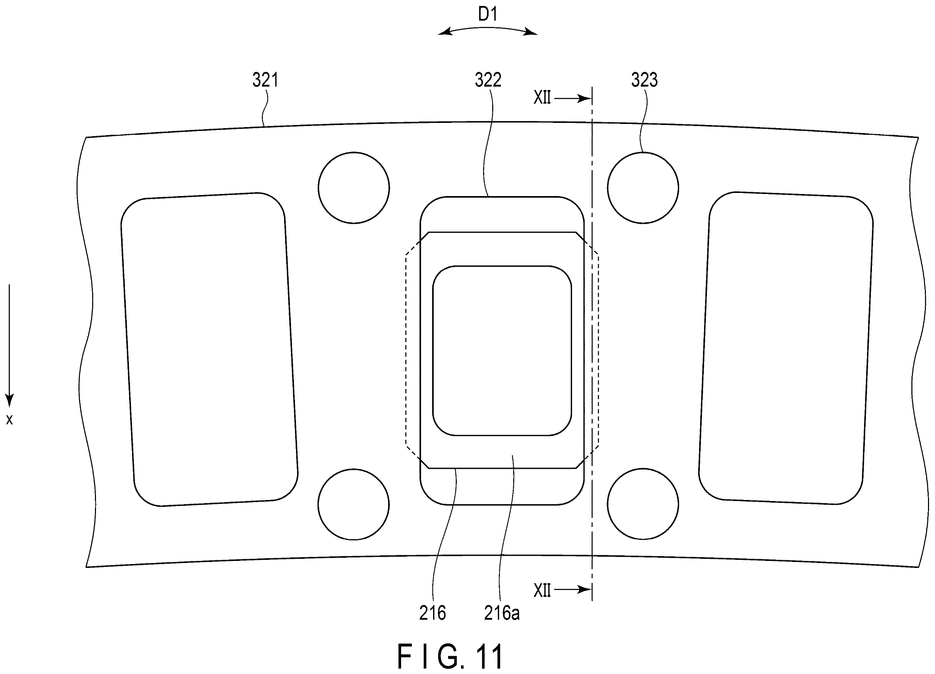

FIG. 11 is a top view illustrating the cover 321 that presses the cell 216. As shown in FIG. 11, the cover 321 has the second through hole 322 and the vent hole 323. The second through hole 322 is a through hole provided at a position corresponding to the insertion hole when the cover 321 is attached to housing 311. From the second through hole 322, a specimen, a reagent, and the like are injected into the cell 216, via the specimen probe 207, the first reagent dispensing probe 209, and the second reagent dispensing probe 211. The second through hole 322 has a width larger in the longitudinal direction (x direction) than that of the opening of the cell 216. Accordingly, a gap is provided between the edge portion 216a of the opening of the cell 216 and the edge portion of the second through hole 322 in the longitudinal direction. Thus, when the mixed liquid and/or the cleaning liquid or the like overflows from the inside of the cell 216 when the cell 216 is cleaned, the overflowing liquid flows out to the groove portion 315 from the gap between the edge portion of the cover 321 and the edge portion of the second through hole 322, and it is therefore possible to reduce the possibility that the overflowing liquid will enter the inside of another cell along the top surface of the cover 216. Furthermore, it is possible to discharge water vapor accumulated in the space formed by the groove portion 315 covered by the cover 216 to the outside of the space.

As shown in FIG. 11, the cover 321 is provided with the vent hole 323, which is a through hole different from the second through hole 322. When the cover 321 is attached to the housing 311, the vent hole 323 communicates the space formed by the groove portion 315 covered by the cover 321 and the space outside the cover 321 without coming into contact with the edge portion 216a of the opening of the cell 216. By providing the vent hole 323 in the cover 321, it is possible to discharge the water vapor accumulated in the groove portion 315 via the vent hole 323. By discharging the water vapor accumulated in the groove portion 315, it is possible to reduce dew condensation on the back surface 321a of the cover 321 or the like, and it is possible to reduce the possibility that dew condensation water will enter the inside of the cell 216.

The second through hole 322 is not limited to having a larger longitudinal width (width in the x direction) than that of the opening of the cell 216. For example, the second through hole 322 may have a larger lateral width (width in the D1 direction) than that of the opening of the cell 216. The size, number, and/or position of the vent holes 323 are not limited to those described above. For example, the vent holes 323 having a mesh structure may be provided on the entire surface or part of the surface of the cover 321. The vent holes 323 may have different sizes.

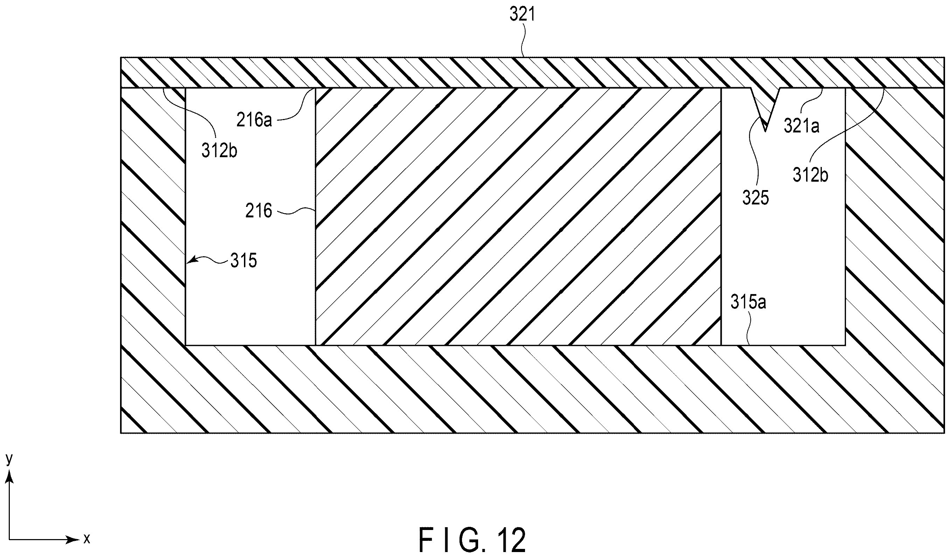

FIG. 12 is a cross-sectional view taken along line XII-XII of FIG. 11. As illustrated in FIG. 12, the back surface 321a is provided with a liquid avoiding portion 325 that protrudes toward the bottom surface 315a from the back surface 321a. The liquid avoiding portion 325 is a protrusion provided to cause the liquid flowing along the back surface 321a to fall onto the bottom surface 315a. To be specific, the liquid flowing along the back surface 321a is a temperature-controlled liquid adhering to the back surface 321a as a result of movement by capillary action or the like from the gap between the back surface 321a and the top surface 312b, or is dew condensation water condensed on the back surface 321a because of water vapor accumulated in the groove portion 315. The liquid such as the temperature-controlled liquid adhering to the back surface 321a on the inner peripheral side relative to the cell 216 or the dew condensation water flows along the back surface 321a to reach the liquid avoiding portion 325 by the centrifugal force associated with the rotation of the cassettes 301, flows along the liquid avoiding portion 325, and drops onto the bottom surface 315a at a position lower than the edge portion 216a of the opening of the cell 216 in the y direction. Thus, it is possible to reduce the possibility that the liquid flowing along the back surface 321a will enter the inside of the cell 216.

The liquid avoiding portion 325 is not limited to being provided on the inner peripheral side relative to the cell 216. For example, the liquid avoiding portion 325 may be provided on the outer peripheral side relative to the cell 216, or may be provided to surround the second through hole 322.

### (In sum)

Here, the present embodiment will be compared with an automatic analyzer using a cassette having a housing provided with no groove portion. In the comparative example, the gap between the side surface of the insertion hole and the side surface of the cell communicates with the gap between the edge portion of the cell and the cover. Furthermore, the gap between the top surface of the upper member and the cover communicates with the gap between the edge portion of the cell and the cover. Therefore, in a case where a plurality of cassettes holding cells are immersed in the temperature-controlled liquid stored in the temperature-controlled bath, there is a possibility that the temperature-controlled liquid that has risen along the cassettes to the gap between the side surface of the insertion hole and the side surface of the cell and/or the gap between the top surface of the upper member and the cover due to capillary action or the like may enter the inside of the cell from the opening of the cell via the gap between the edge portion of the cell and the cover communicating with the gap. Once the temperature-controlled liquid flows into the cell, the accuracy of measurement of the mixed liquid contained in the cell decreases.

The automatic analyzer according to the present embodiment includes the cell 216 containing the reaction liquid, the plurality of cassettes 301 holding the cell 216, and the temperature-controlled bath 217 accommodating the plurality of cassettes 301 such that part of each of the plurality of cassettes 301 is immersed in the temperature-controlled liquid. Each of the cassettes 301 has the housing 311 provided with the insertion hole 312a into which the cell 216 is inserted. The housing 311 has the groove portion 315 in which the bottom surface 315a is formed such that the edge portion 216a of the opening of the cell 216 inserted into the insertion hole 312a protrudes from the bottom surface 315a in which the opening of the insertion hole 312a is formed.

With the above-described structure, the temperature-controlled liquid rising from the gap between the adjacent cassettes 301, the gap between the cassette 301 and the cell 216 held in the cassette 301, and/or the gap between the cover 321 and the cell 216 held in the cassette 301 flow into the groove portion 315 without reaching the edge portion 216a of the opening of the cell 216, and it is therefore possible to reduce the possibility that the temperature-controlled liquid will enter the inside of the cell 216. Furthermore, by providing the cutout 314a communicating with the groove portion 315 in the side surface member 314 of the housing 311, the temperature-controlled liquid rising through the gap between the adjacent cassettes 301 flows into the groove portion from the cutout 314a, and it is therefore possible to reduce the possibility that the temperature-controlled liquid will enter the inside of the cell 216.

Furthermore, by not bonding the gap between the insertion hole 312a and the cell 216 with silicon or the like, it is possible to individually replace the cells 216, and it is possible to reduce the possibility that an adhesive such as silicon will vaporize and enter the inside of the cell 216. Furthermore, by the cover 216 being detachably attached to the housing 311, it is possible to individually replace the cells 216. By providing, in the cover 321, the vent hole 323 communicating with the gap between the cover 321 and the bottom surface 315a of the groove portion 315, it is possible to reduce dew condensation on the back surface 321a of the cover 321, and it is possible to reduce the possibility that the liquid condensing on the back surface 321a of the cover 321 will enter the inside of the cell 216. Furthermore, by providing the vertical or horizontal width of the opening of the second through hole 322 to be larger than that of the opening of the cell 216, the liquid overflowing from the inside of the cell 216 can be discharged to the groove portion 315. In addition, by providing the liquid avoiding portion 325 in the back surface 321a of the cover 321, it is possible to reduce the possibility that the liquid flowing along the back surface 321a of the cover 321 will enter the inside of the cell 216.

According to at least one of the embodiments described above, it is possible to reduce the possibility that the liquid will be mixed into the inside of the cell.

The term "processor" used in the above description indicates, for example, a circuit such as a CPU, a GPU, or an application specific integrated circuit (ASIC), and a programmable logic device (for example, a simple programmable logic device (SPLD), a complex programmable logic device (CPLD), a field programmable gate array (FPGA)), and so on. The processor realizes functions by reading and executing a program stored in the memory circuitry. The program may be directly incorporated into the circuit of the processor instead of being stored in the storage circuit. In this case, the processor implements the function by reading and executing the program incorporated into the circuit. On the other hand, if the processor is an ASIC, for example, the functions are directly incorporated into the circuitry of the processor as logic circuits, instead of the programs being stored in the storage circuit. Each processor of the above embodiments is not necessarily configured as a single circuit, and may be configured by a combination of a plurality of independent circuits to implement its functions. Furthermore, the components shown in FIG. 1 may be integrated into a single processor to implement their functions.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An automatic analyzer comprising:
a cell containing a reaction liquid;
a plurality of holders holding the cell; and
a temperature-controlled bath accommodating the plurality of holders such that part of each of the holders is immersed in a temperature-controlled liquid,
wherein each of the plurality of holders includes a housing provided with an insertion hole into which the cell is inserted, and
the housing includes a groove in which a bottom surface is formed such that an edge of an opening of the cell inserted into the insertion hole protrudes from the bottom surface in which an opening of the insertion hole is formed.

2. The automatic analyzer according to claim 1, wherein the housing of each of the plurality of holders includes a cutout that allows the grooves to communicate with each other on a surface facing a holder of the plurality of holders.

3. The automatic analyzer according to claim 2, wherein
the temperature-controlled bath accommodates the plurality of holders circularly, and
the cutout is provided such that the grooves of the plurality of holders communicate with each other to form a moat-like shape.

4. The automatic analyzer according to claim 3, wherein a side wall on an outer peripheral side of the groove is provided with a first through hole for discharging a liquid flowing through the groove.

5. The automatic analyzer according to claim 1, further comprising:
a cover provided removably in the housing and provided with a second through hole at a position corresponding to the insertion hole,
wherein the cover fixes the cell to the housing by pressing the edge of the opening of the cell inserted into the insertion hole with an edge of the second through hole.

6. The automatic analyzer according to claim 5, wherein
a side wall on an outer peripheral side of the groove is provided with a first through hole for discharging the liquid flowing through the groove, and
the cover further includes an engagement portion that engages with the first through hole or an edge of the first through hole.

7. The automatic analyzer according to claim 5, wherein the cover further includes a vent hole that communicates with a gap between the cover and the bottom surface of the groove.

8. The automatic analyzer according to claim 5, wherein an opening of the second through hole is provided to have a larger longitudinal or horizontal width than the opening of the cell.

9. The automatic analyzer according to claim 5, further comprising, on a back surface of the cover that faces the bottom surface of the groove, a liquid avoiding portion that protrudes toward the bottom surface of the groove from the back surface.

10. The automatic analyzer according to claim 9, wherein
the temperature-controlled bath accommodates the plurality of holders circularly, and
the liquid avoiding portion is provided on an inner peripheral side relative to the cell inserted into the insertion hole.

11. The automatic analyzer according to claim 9, wherein
the liquid avoiding portion is provided to cause a liquid flowing along the back surface to fall onto the bottom surface of the groove.

12. The automatic analyzer according to claim 4, wherein
the housing further includes a water conduit provided on an outer peripheral side of the side wall and in which cut plates are formed on a side wall on an outer peripheral side, and
the water conduit forms a flow path of the liquid discharged from the first through hole.

13. A cell cassette comprising:
a housing provided with an insertion hole into which a cell containing a reaction liquid is inserted,
wherein the housing includes a groove in which a bottom surface is formed such that an edge of an opening of the cell inserted into the insertion hole protrudes from the bottom surface in which an opening of the insertion hole is formed.
